# EUROPÄISCHE PATENTSCHRIFT

(11) **EP 1 452 266 B1**
(45) Veröffentlichungstag und Bekanntmachung des Hinweises auf die Patenterteilung: **03.12.2008**
(21) Anmeldenummer: 04003932.3
(22) Anmeldetag: 20.02.2004
(51) Int. Cl.: B23Q 1/28, B23Q 1/70

(54) **Werkstückaufnahme für stangenförmige Werkstücke**
Workpiece holder for elongated work pieces
Support d'usinage pour tiges à usiner

(30) Priorität: 26.02.2003 DE 20303147 U
(43) Veröffentlichungstag der Anmeldung: 01.09.2004
(73) Patentinhaber: DECKEL MAHO Pfronten GmbH, 87459 Pfronten (DE)
(72) Erfinder: Lechleiter, Karl, 87466 Oy-Mittelberg (DE); Geissler, Alfred, 87459 Pfronten (DE)
(74) Vertreter: Beetz & Partner

(56) Entgegenhaltungen:
- EP-A- 0 358 531
- DE-A1- 3 141 974
- DE-B- 1 112 873

## Beschreibung

Die Erfindung betrifft eine Werkstückaufnahme zur Fräs- und Drehbearbeitung von stangenförmigen Werkstücken gemäß dem Oberbegriff des Patentanspruchs 1.

Aus der EP 0 358 531 A ist eine Werkstückaufnahme zur Fräs- und Drehbearbeitung von Werkstücken bekannt, die eine in einem Gehäuse drehbar gelagerte vollzylindrische und massive Arbeitsspindel enthält. An dem arbeitsseitigen Ende dieser Arbeitsspindel befindet sich ein Spannfutter, in das ein kurzes Werkstück gespannt werden kann. Als Drehantrieb für die Arbeits- bzw. Werkstückspindel dient ein Elektromotor, dessen Stator im Gehäuse und dessen Rotor direkt auf der Werkstückspindel befestigt ist. An dem dem arbeitsseitigen Ende abgewandten Endteil der Werkstückspindel ist eine Scheibenbremse als Fixiervorrichtung vorgesehen, mit der die Werkstückspindel mittels einer Steuereinheit in vorgegebenen Winkelpositionen festgestellt werden kann. Eine Bremsscheibe dieser Fixiervorrichtung ist auf der vollzylindrischen Spindel und zwei Sättel mit Bremsklötzen sind im Gehäuse befestigt.

In der DE 11 12 873 B ist eine Werkstückaufnahme einer Werkzeugmaschine beschrieben, die eine in einem Spindelstockgehäuse drehbar gelagerte vollzylindrische und damit massive Werkstückspindel aufweist. An dem arbeitsseitigen Stirnende der Spindel ist ein Spannfutter zum Festspannen eines scheibenförmigen Werkstücks, z.B. eines Kegeltellerrads, vorgesehen. Um die Werkstückspindel zusammen mit dem scheibenförmigen Werkstück in einer vorgegebenen Winkelposition im Spindelstockgehäuse zu fixieren, ist eine Fixier- bzw. Klemmeinrichtung an einem Ende des Spindelstockgehäuses vorgesehen, die zwei Spannringe enthält. Jeder Spannring weist einen inneren dünnwandigen Radialflansch auf. Beide Radialflansche greifen einander gegenüberliegend in eine tiefe Umfangsnut ein, die am vorderen Endabschnitt der Werkstückspindel ausgebildet ist. Diese beiden dünnwandigen Ringflansche begrenzen in der Umfangsnut eine abgedichtete radiale Druckkammer, die mit Drucköl beaufschlagt werden kann. Durch den hydraulischen Innendruck in dieser Druckkammer werden die dünnwandigen Radialflansche gegen die angrenzenden Radialflächen der Umfangsnut gedrückt, sodass durch Reibungsschluss die Werkstückspindel im Gehäuse festgeklemmt wird. Diese Klemmeinrichtung erfordert durch die notwendige Mehrteiligkeit der Spannringe und die in der Spindel auszuformende Umfangsnut einen beträchtlichen Herstellungs- und Montageaufwand.

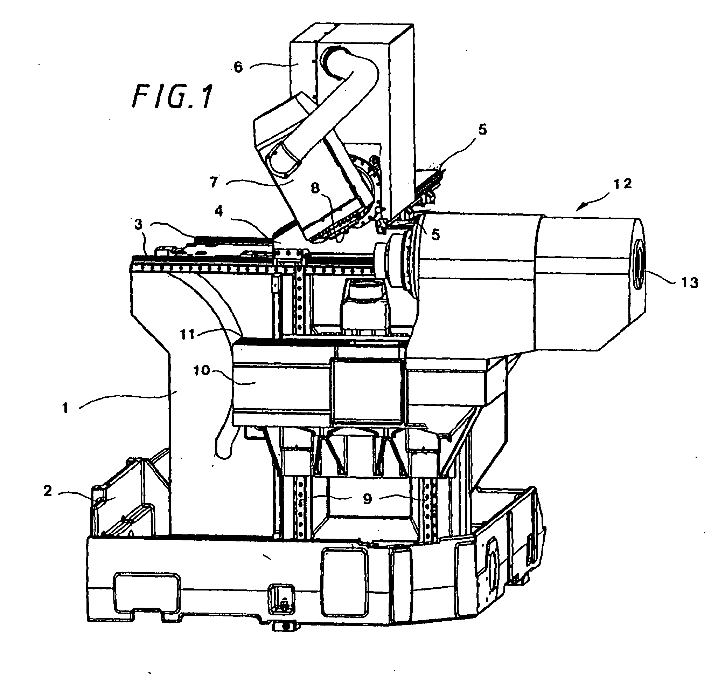

In Fig. 1 ist eine bekannte Werkzeugmaschine zur bevorzugten Fräsbearbeitung und zur Drehbearbeitung von stangenförmigen Werkstücken dargestellt. Diese Werkzeugmaschine enthält einen relativ breiten Fahrständer 1 in einer Bodenwanne 2, auf dessen Oberseite horizontale Führungsschienen 3 montiert sind. In diesen Führungsschienen 3 läuft ein Schlitten 4, der quer zu den Führungsschienen 3 verlaufende Schienen 5 trägt, in denen ein vertikaler Spindelstock 6 in einer zweiten horizontalen Koordinatenachse motorisch verfahrbar ist. An der Stirnseite dieses Spindelstocks 6 ist ein Spindelkopf 7 um eine zur zweiten Koordinatenachse parallele Achse verdrehbar gelagert. In diesem Spindelkopf 7 befindet sich eine in herkömmlicher Weise durch einen Motor antreibbare Arbeitsspindel 8, in der wahlweise Fräs-, Bohr- und auch Drehwerkzeuge manuell oder mittels Werkzeugwechsler eingespannt werden können.

An der vorderen Stirnwand des Ständers 1 ist in vertikalen Führungsschienen 9 eine Konsole 10 in der vertikalen Koordinatenachse verfahrbar geführt, die neben einer Spannfläche 11 seitlich versetzt zum Arbeitsraum eine Werkstückaufnahme 12 für stangenförmige Werkstücke trägt.

Werkstückaufnahmen 12 des in Fig. 1 dargestellten Typs sind bekannt und dienen zur Halterung von stangenförmigen Werkstücken, die z.B. mittels eines - nicht dargestellten - Stangenladers in die hintere Öffnung 13 meist automatisiert eingeschoben und durch geeignete Spannmittel fixiert werden.

Bei herkömmlichen Werkstückaufnahmen für die Fräs- und Drehbearbeitung von stangenförmigen Werkstücken, beispielsweise in einer in Fig. 1 dargestellten Werkzeugmaschine, ist eine Fixiereinrichtung am rückwärtigen Ende der hohlzylindrischen Werkstückspindel angeordnet, mit welcher die Werkstückspindel zur Durchführung bestimmter Bohr- und Fräsarbeiten in vorgegebenen Winkelpositionen im Gehäuse festgelegt wird. Bekannte Fixiereinrichtungen enthalten eine nach dem Prinzip der Scheibenbremse arbeitende Klemmanordnung, deren Scheiben radial abstehend auf der Hohlspindel und wechselweise in einer entsprechenden Gehäuseausnehmung axial verschiebbar angeordnet sind und im Bedarfsfall durch einen hydraulischen Kolben fest gegeneinander gedrückt werden. Diese Fixiereinrichtungen sind konstruktiv aufwändig und beanspruchen einen gewissen Platz, sodass sich die Werkstückaufnahme insgesamt verlängert. Ein technisch wesentlicher Nachteil dieser Fixiereinrichtung liegt noch darin, dass die Hohlspindel meist nur an ihrem rückwärtigen Ende im Gehäuse festgelegt wird. Wenn Werkstückstangen von größerem Durchmesser von z.B. 100 mm und mehr mit relativ hoher Spanleistung gefräst oder gebohrt werden sollen, kann sich die die jeweilige Werkstückstange mit Spiel umgebende Hohlspindel in gewissen Grenzen elastisch verdrehen, da der von der Bearbeitung herrührende Kraftschluss vom vorstehenden bearbeiteten Stangenende über die Spannzange in die Hohlspindel und über die am Hohlspindelende angeordnete Fixiereinrichtung in das Gehäuse eingeleitet wird. Diese Verdrehungen der Hohlspindel können zu Positionsfehlern des Werkstücks während seiner Bearbeitung führen.

Aufgabe der Erfindung ist es, eine Werkstückaufnahme zur Fräs- und Drehbearbeitung von stangenförmigen Werkstücken zu schaffen, die eine verbesserte Bearbeitungsgenauigkeit auch bei dickerem Stangenmaterial und relativ großen Spankräften gewährleistet und die eine Verringerung der Längsabmessungen bei vermindertem konstruktivem Aufwand ermöglicht.

Diese Aufgabe wird erfindungsgemäß durch die im Patentansprüch 1 angegebenen Merkmale gelöst.

Die kompakte Ausbildung der Fixiereinrichtung ermöglicht deren Anordnung am arbeitsseitigen Endteil des Gehäuses ohne Verlängerung der Werkstückaufnahme. Zwischen der Einspannung des stangenförmigen Werkstücks und der Fixiereinrichtung besteht nur ein kurzer axialer Abstand, sodass die auf die Spindel bei der Fräsbearbeitung des vorstehenden Stangenendes erzeugten Drehmomente auf kurzem Weg über die aktivierte Fixiereinrichtung in das Gehäuse eingeleitet werden. Torsionserscheinungen der Spindel, wie sie bei der bekannten Anordnung der Fixiereinrichtung am rückwärtigen Spindelende auftreten, sind damit ausgeschlossen.

Schonende Beanspruchungen der vorderen Spindellager können dadurch erreicht werden, dass die Fixiereinrichtung vor der vorderen Spindellagerung angeordnet wird.

Die Fixiereinrichtung weist mindestens ein die Spindel zumindest teilweise umgebendes Fixierelement auf, das unmittelbar auf die Umfangsfläche der Spindel einwirkt. Dies ermöglicht die Verwendung von einfachen hohlzylindrischen Spindeln, ohne dass Teile der Fixiereinrichtung auf dem Spindelkörper ausgebildet bzw. befestigt werden müssten. Dabei sollte das Fixierelement in einem Gehäuseteil angeordnet und unter einer geeigneten Antriebskraft in Richtung der Umfangsfläche der Spindel bewegbar oder verformbar sein.

Gemäß der Erfindung enthält das Fixierelement eine in einem Gehäuseteil ausgebildete ringförmige langgestreckte und koaxiale Druckkammer, in die mindestens ein Druckölkanal mündet und die nach radial innen von einer verformbaren Wand begrenzt wird. Wenn die Druckkammer mit Drucköl beaufschlagt wird, erfolgt eine Ausbauchung dieser Innenwand und deren fester Andruck an die Umfangsfläche der Spindel. Dabei kann die verformbare Innenwand Bestandteil des Gehäuseteils oder auch als sog. Dehnhülse ausgebildet sein.

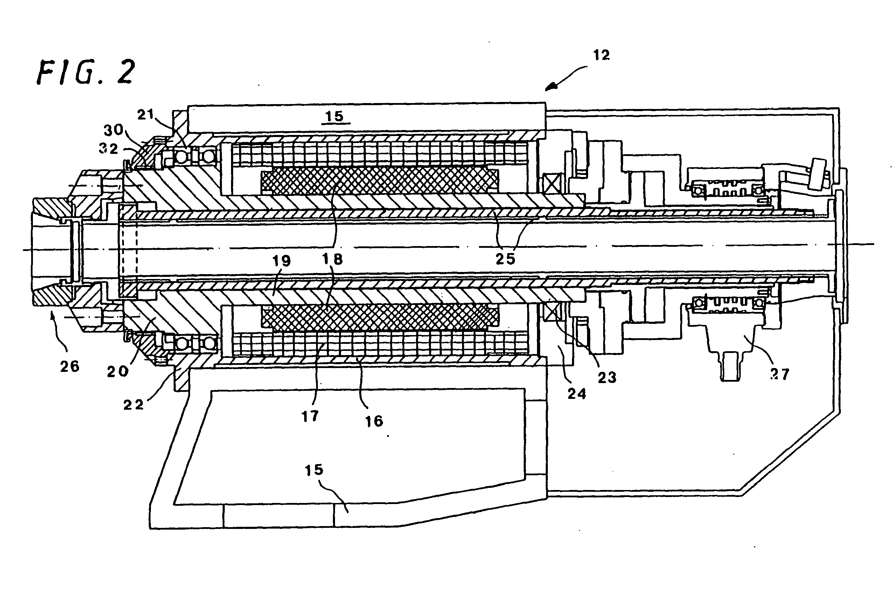

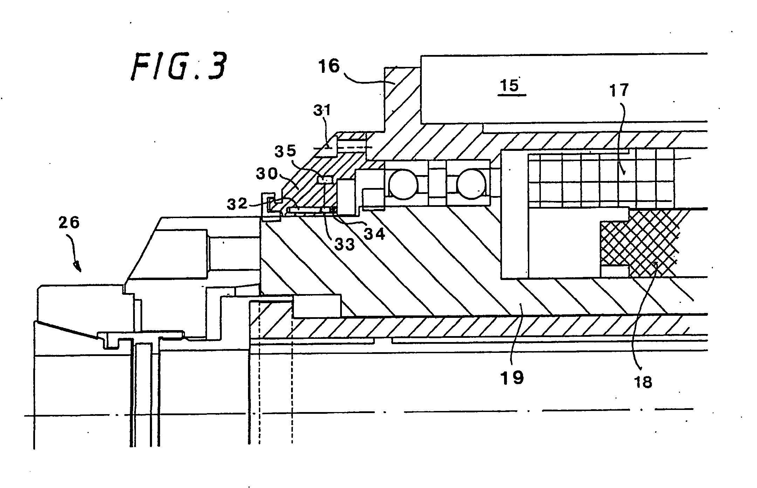

Im Folgenden wird ein Ausführungsbeispiel der Erfindung anhand der Fig. 2 und 3 der Zeichnung ausführlicher beschrieben. Es zeigen:
- Fig. 1: eine Werkzeugmaschine mit einer Werkstückaufnahme für Werkstückstangen;
- Fig. 2: eine Werkstückaufnahme im schematischen Axialschnitt mit einer erfindungsgemäßen Fixiereinrichtung;
- Fig. 3: einen vergrößerten Ausschnitt A der Fig. 2.

Die Werkzeugmaschine nach Fig. 1 sowie der grundsätzliche Aufbau der Werkstückaufnahme wurde bereits vorstehend beschrieben. Wie aus Fig. 2 und 3 ersichtlich, ist an dem linken Endteil 22 des Gehäuses 16 ein Abschlussring 30 durch Schrauben 31 befestigt. Dieser einen Teil des Gehäuses 16 bildende Abschlussring 30 enthält eine zur Spindelachse koaxiale langgestreckte schmale Ringkammer 32, die nach radial innen von einer dünnen und damit elastisch verformbaren Wand 33 begrenzt wird. Diese Druckkammer 32 ist endseitig durch einen Dichtungsring 34 abgedichtet und über einen Kanal 35 an eine Druckölversorgung angeschlossen. Durch Beaufschlagen der Druckkammer 32 wird die dünne Wand 33 nach radial innen elastisch ausgewölbt und gelangt dadurch in feste Druckanlage an die äußere Umfangsfläche der Spindel 19. Auf diese Weise erfolgt die feste und genaue Fixierung der Spindel 19 im Spindelgehäuse 16.

Die Erfindung ist nicht auf das dargestellte Ausführungsbeispiel beschränkt. So kann die Druckkammer 32 statt durch die als Teil des Abschlussrings 30 ausgeführte Wand 33 auch durch eine sog. Dehnhülse begrenzt werden, die elastisch verformbar ist und in der Druckkammer flüssigkeitsdicht befestigt wird. Ferner besteht auch die Möglichkeit, die Druckkammer 32 statt koaxial zur Spindelachse schräg zwischen einem Gehäuseteil und einer entsprechenden Fläche der Spindel anzuordnen.

## Patentansprüche

1. Werkstückaufnahme zur Fräs- und Drehbearbeitung von stangenförmigen Werkstücken, mit
- einem langgestreckten Gehäuse (16),
- einer im Gehäuse (16) drehbar gelagerten hohlzylindrischen Spindel (19) zur drehfesten Aufnahme eines stangenförmigen Werkstücks,
- einem elektrischen Direktantrieb (17, 18) für die Spindel (19), dessen Rotor (18) auf der Spindel (19) und dessen Stator (17) im Gehäuse (16) befestigt ist,
- am arbeitsseitigen Endteil der Spindel (19) vorgesehenen Spannmitteln zum Fixieren eines stangenförmigen Werkstücks in der Spindel (19),
- einer am rückwärtigen Teil des Gehäuses vorgesehenen Anschlussanordnung (27) für die Energie- und Druckölzuführung und
- einer kompakt ausgebildeten Fixiereinrichtung (32, 33) zum Festklemmen der Spindel (19) im Gehäuse (16), die am arbeitsseitigen Endteil (22) des Gehäuses (16) vor einer vorderen Spindellagerung (21) angeordnet ist und eine Druckkammer (32) mit einer zum Festklemmen hydraulisch verformbaren Wand (33) aufweist,
**dadurch gekennzeichnet, dass**
- die Druckkammer (32) koaxial zur Spindelachse angeordnet und als langgestreckte schmale Ringkammer ausgebildet ist und
- die hydraulisch verformbare Wand (33) die radial innere Umfangswand der Druckkammer (32) bildet, welche die Spindel (19) direkt umgibt und bei Beaufschlagen der Druckkammer (32) mit Drucköl durch Auswölben nach radial innen in feste Druckanlage an die äußere Umfangsfläche-der Spindel (19) gelangt.

2. Werkstückaufnahme nach Anspruch 1,
**dadurch gekennzeichnet, dass**
die radial innere Umfangswand der Druckkammer (32) Bestandteil eines Abschlussringes (30) des Gehäuses (16) ist.

3. Werkstückaufnahme nach Anspruch 1,
**dadurch gekennzeichnet, dass**
die innere Umfangswand der Druckkammer (32) eine Dehnhülse ist.

4. Werkstückaufnahme nach einem der vorstehenden Ansprüche,
**dadurch gekennzeichnet, dass**
der arbeitsseitig vordere Teil (20) der Spindel (19) gegenüber ihrem hinteren Spindelteil erweitert ist und in Kugellagern (21) im vorderen Endteil (22) des Gehäuses (16) gelagert ist.

5. Werkstückaufnahme nach Anspruch 4,
**dadurch gekennzeichnet, dass**
am arbeitsseitigen Endteil (22) des Gehäuses (16) ein Abschlussring (30) befestigt ist, der den erweiterten vorderen Teil (20) der Spindel (19) umgibt und die Druckkammer (32) sowie einen Kanal (35) für die Druckölversorgung enthält.

## Claims

1. A workpiece holder for milling and turning bar-shaped workpieces, comprising
- an elongated housing (16),
- a hollow cylindrical spindle (19) rotatably supported in the housing (16) for the rotationally fixed reception of a bar-shaped workpiece,
- an electric direct drive (17, 18) for the spindle (19), said drive comprising a rotor (18) fixed on the spindle (19) and a stator (17) fixed in the housing (16),
- a clamping means provided at the working end of the spindle (19) for fixing a bar-shaped workpiece in the spindle (19),
- a connection unit (27) provided at a rear part of the housing for energy and pressure oil supply, and
- a fixing means (32, 33) for fixing the spindle (19) in the housing (16), said fixing means being formed as a compact part and arranged on the working end (22) of the housing (16) before a front side spindle bearing arrangement (21), the fixing means further comprising a pressure chamber (32) with a hydraulically deformable wall for clamping,
**characterized in that**
- the pressure chamber (32) is disposed coaxially to the spindle axis and formed as an elongated narrow annular chamber, and
- the hydraulically deformable wall (33) forms the radially inner circumferential wall of the pressure chamber (32) which directly surrounds the spindle (19) and upon pressurizing the pressure chamber (32) with pressure oil comes into tight pressure fitting with the outer peripheral surface of the spindle (19) by vaulting in a radially inward direction.

2. The workpiece holder according to claim 1,
**characterized in that**
the radially inner circumferential wall of the pressure chamber (32) is a component of a terminating ring (30) of the housing (16).

3. The workpiece holder according to claim 1,
**characterized in that**
the inner circumferential wall of the pressure chamber (32) is a resilient sleeve.

4. The workpiece holder according to claim 1,
**characterized in that**
the working front (20) of the spindle (19) is enlarged compared to its rear spindle part and supported on ball bearings (21) in the front end part (22) of the housing (16).

5. The workpiece holder according to claim 1,
**characterized in that**
a terminating ring (30) is attached to the working end (22) of the housing (16), which surrounds the enlarged front (20) of the spindle (19) and contains the pressure chamber (32) as well as a channel (35) for supplying the pressure oil.

## Revendications

1. Fixation de pièce pour l'usinage par fraisage et tour de pièces se présentant sous la forme de tiges, comprenant
- un boîtier allongé (16),
- une broche (19) prenant la forme d'un cylindre creux et rotative sur paliers pour la fixation résistante à la rotation d'une pièce en forme de tige,
- un entraînement direct électrique (17, 18) pour la broche (19), dont le rotor (18) est fixé sur la broche (19) et dont le stator ( 17) est fixé dans le boîtier (16),
- des moyens de serrage prévus sur la partie finale, côté travail, de la broche (19) pour fixer une pièce en forme de tige dans la broche (19),
- un dispositif de connexion (27) prévu sur la partie arrière du boîtier pour l'apport en énergie et en huile de pression et
- un système de fixation (32, 33), conçu de manière compacte, pour fixer par serrage la broche (19) dans le boîtier (16) qui est disposé à l'extrémité (22), côté travail, du boîtier (16) devant un palier de broche avant (21) et qui présente une chambre de pression (32) avec une paroi (33) déformable hydrauliquement pour la fixation par serrage,
**caractérisée en ce que**
- la chambre de pression (32) est disposée coaxialement à l'axe de la broche et prend la forme d'une chambre cylindrique étroite allongée et
- la paroi (33) déformable hydrauliquement forme la paroi périphérique interne radiale de la chambre de pression (32) qui entoure directement la broche (19) et parvient jusqu'à la surface périphérique externe de la broche (19) lors de la mise sous pression de la chambre de pression (32) avec de l'huile de pression grâce à un bombement vers l'intérieur radialement en position de pression fixe.

2. Fixation de pièce selon la revendication 1, **caractérisée en ce que** la paroi périphérique interne radialement de la chambre de pression (32) fait partie d'un anneau de fermeture (30) du boîtier (16).

3. Fixation de pièce selon la revendication 1, **caractérisée en ce que** la paroi périphérique interne radialement de la chambre de pression (32) est une gaine extensible.

4. Fixation de pièce selon l'une des revendications précédentes, **caractérisée en ce que** la partie avant (20) du côté travail de la broche (19) est élargie par rapport à sa partie broche arrière et est disposée sur des paliers à billes (21) à l'extrémité avant (22) du boîtier (16).

5. Fixation de pièce selon la revendication 4, **caractérisée en ce qu'**un anneau de fermeture (30), qui entoure la partie avant élargie (20) de la broche (19) et comprenant la chambre de pression (32) ainsi qu'un canal (35) pour l'alimentation en huile de pression, est fixé à l'extrémité (22), côté travail, du boîtier (16).
